# EUROPEAN PATENT APPLICATION

(11) **EP 0 850 802 A2**
(43) Date of publication of application: **01.07.1998**
(21) Application number: 97122488.6
(22) Date of filing: 19.12.1997
(51) Int. Cl.: B60Q 1/076

(54) **A device for varying the attitude of the front headlamps of motor vehicles, particularly motor cars**

(30) Priority: 27.12.1996 IT TO961088
(71) Applicant: FIAT AUTO S.p.A., 10135 Torino (IT)
(72) Inventor: Andronaco, Carmelo, 10040 Volvera (Torino) (IT)
(74) Representative: Serra, Francesco

(57) **Abstract**

In the device described for varying the attitude of the front headlamps of a motor vehicle, digital signals coming from a control (2) and relating to the desired attitude of the headlamps are compared with signals indicative of the existing position of the headlamps (F1, F2). Digital comparators (4, 6) control electric motors (12, 14) in order to operate actuators (8, 10) until the signals coming from the control (2) are equal to the signals indicative of the positions of the actuators (8, 10).

## Description

The present invention relates to a device for varying the attitude of the front headlamps of motor vehicles, particularly motor cars.

Conventional devices for varying the attitude of front headlamps or light units comprise, in the motor vehicle, a rheostat control which, according to its position, controls actuators comprising potentiometers and mounted on the front headlamps. A comparison between the resistance value of the control rheostat and those of the actuators mounted on the front headlamps causes the actuators to be moved until equality between the resistance values of the actuator rheostats and of the control rheostat is achieved.

Although the devices just described are satisfactory from a functional point of view, they are quite expensive and complicated from an electronic point of view.

The object of the present invention is to provide a device for varying the attitude of the headlamps of a motor vehicle which does not use rheostats and which is of simple construction and inexpensive.

The present invention achieves the aforementioned objects by means of a device for varying the attitude of the front headlamps of motor vehicles, particularly motor cars, having the specific characteristics recited in the following claims.

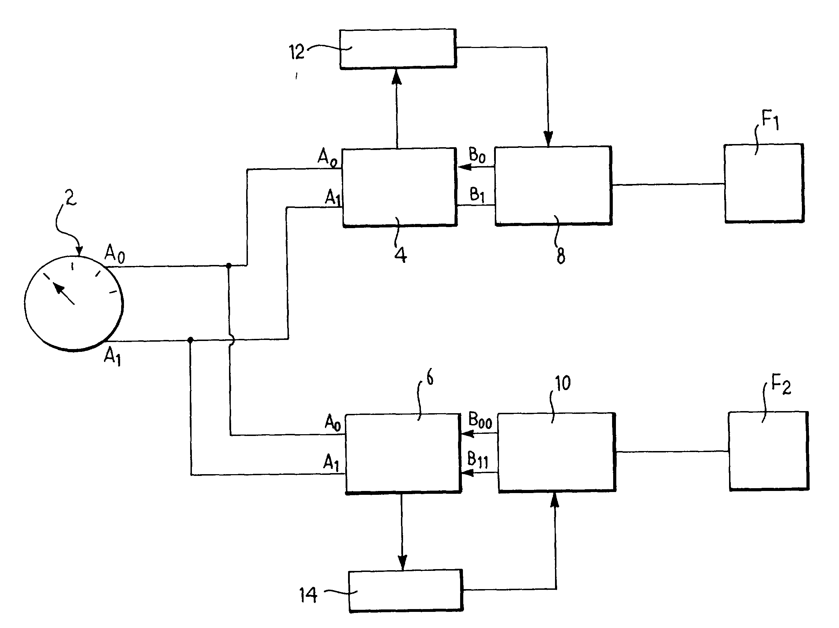

The invention will now be described with reference to the appended drawing, provided purely by way of non-limiting example, showing schematically a block diagram of the device of the invention in which a control, for example, a four-position control, normally disposed on a motor-vehicle dashboard (not shown), is indicated 2.

The control 2 transmits two-bit digital codes (A₀, A₁) which identify the control position set.

The two-bit digital codes (A₀, A₁) reach the first inputs of a first digital comparator 4 and of a second digital comparator 6, the second inputs of which receive two-bit digital codes (B₀, B₁); (B₀₀, B₁₁) which come from a first actuator 8 and from a second actuator 10, respectively, and which are indicative of the existing positions of the actuators. In the embodiment illustrated, the actuator 8 is connected to the front headlamp F1 of the motor vehicle and the actuator 10 is connected to the front headlamp F2 of the motor vehicle.

The output signals of the digital comparators 4 and 6 reach a first electric motor 12 connected to the actuator 8 and a second electric motor 14 connected to the actuator 10, respectively.

The device just described operates as follows.

When a desired position of the headlamps F1 and F2 is set by means of the control 2, the digital code (A₀, A₁) indicative of this position reaches the digital comparators 4 and 6.

In the digital comparator 4, the digital code (A₀, A₁) is compared with the digital code (B₀, B₁) indicative of the position of the actuator 8 and the electric motor 12 is operated in a sense such as to move the actuator 8 in one direction or in the opposite direction until the digital code (B₀, B₁) is equal to the digital code (A₀, A₁); in this condition, the electric motor 12 is stopped and the headlamp F1 is in the desired position. The procedure described above for the comparator 8 is repeated in exactly the same manner for the comparator 6; in this case, equality is achieved between the digital code (B₀₀, B₁₁) coming from the actuator 10 and the digital code (A₀, A₁) coming from the control 2, by operation of the electric motor 14.

Upon completion of the operations to make the digital signals (B₀, B₁); (B₀₀, B₁₁) equal to the digital value (A₀, A₁), the headlamps F1 and F2 are positioned in accordance with the value set by the control 2. The advantages of the device according to the invention are clear from the foregoing description.

Digital signals can be used quite easily with great precision, for example, with a rotary contact on a printed circuit; both the size and the weight of the electrical wiring are reduced and electrical consumption is particularly low.

Naturally, the principle of the invention remaining the same, the details of construction and forms of embodiment may be varied widely with respect to those described and illustrated, without thereby departing from the scope of the present invention.

## Claims

1. A device for varying the attitude of the front headlamps of motor vehicles, particularly motor cars, characterized in that it comprises a digital-code control (2) disposed in the motor vehicle and a pair of digitally-controlled actuators (8, 10) for moving respective front headlamps (F1, F2) of the motor vehicle and for supplying respective digital codes (B₀, B₁); (B₀₀, B₁₁) indicative of the existing positions of the headlamps (F1, F2) to a pair of respective digital comparators (4, 6) which receive the digital signals (A₀, A₁) coming from the control (2), the pair of digital comparators (4, 6) being able to move the actuators (8, 10) by means of respective electric motors (12, 14) in order to achieve equality between the digital code (A₀ A₁) supplied by the control (2) and the digital codes (B₀, B₁) and (B₀₀, B₁₁) supplied by the actuators (8, 10), respectively.

2. A device according to Claim 1, characterized in that the digital codes of the control (2) and of the actuators (8, 10) are at least two-bit codes.

3. A device according to Claim 2, characterized in that the digital codes of the digital control (2) and of the actuators (8, 10) are two-bit codes.

4. A device according to any one of the preceding claims, characterized in that the control (2) is of the rotary type.
A device as described and illustrated and for the purposes specified.
